# EUROPEAN PATENT APPLICATION

(11) **EP 1 271 897 A2**
(43) Date of publication of application: **02.01.2003**
(21) Application number: 02013635.4
(22) Date of filing: 19.06.2002
(51) Int. Cl.: H04M 1/02, H04M 1/725

(54) **Portable information terminal**

(30) Priority: 25.06.2001 JP 2001191189
(71) Applicant: Pioneer Corporation, Meguro-ku, Tokyo (JP); Pioneer Design Corporation, Meguro-ku, Tokyo (JP)
(72) Inventor: Hirayama, Naofumi, c/o Pioneer Design Corporation, Tokyo 153-8654 (JP); Suma, Daisuke, c/o Pioneer Design Corporation, Tokyo 153-8654 (JP); Tomono, Mizuki, c/o Pioneer Design Corporation, Tokyo 153-8654 (JP); Funayama, Tatsufumi, c/o Pioneer Design Corp., Tokyo 153-8654 (JP)
(74) Representative: Bohnenberger, Johannes, Dr.

(57) **Abstract**

A portable information terminal includes a manipulation part 2 and a display part 3 which are coupled with the capability to change in position relative to each other. A rotational position detection sensor 14 is provided in a rotation supporting element 4 for coupling the manipulation part 2 and the display part 3. Each of application programs stored in a memory card loaded in a loading element 2C is corresponded to each of the preset relative positions of the manipulation part 2 and the display part 3 which are coupled to each other. The application program is automatically activated in response to the corresponding relative position of the manipulation part 2 and display part 3 that is detected by the rotational position detection sensor 14.

## Description

### BACKGROUND OF THE INVENTION

### FIELD OF THE INVENTION

This invention relates to a portable information terminal with multifunction capabilities.

The present application claims priority from Japanese Application No. 2001-191189, the disclosure of which is incorporated herein by reference for all purposes.

### DESCRIPTION OF THE RELATED ART

In recent years, various types of portable information terminals such as a PDA and a portable telephone have become rapidly and widely available. With the diversification of the needs of society, a single portable information terminal is required to meet the miscellaneous needs, e.g., communication, dispensation and collection of information, accumulation and editing of information, electronic commerce, and remote controls for other devices. For this purpose, a multifunction design with multifunction capabilities for such portable information terminals needs to be further progressed to increase available functions. Additionally, the portable information terminal is increasingly reduced in size for improving portability.

Conventionally, a variety of operations in such a portable information terminal, e.g., switching of functional modes, is implemented typically by manipulation of combinations of various keys arranged on an operating panel, or a GUI.

From the above point, it is reasoned that in future the manipulation must be more complicated as the portable information terminal is further advanced in multifunction design and size reduction.

At present, however, such explosively widespread use of portable information terminals and the progression of information technology aggravate the widening of a disparity between persons in the degree of successful usage of the information terminals. The widened disparity gives rise to the serious problem of the so-called "digital divide" in which persons unskilled in handling the information terminals are falling behind in society in terms of jobs, income and the like. The "digital divide" problem might become increasingly significant as the portable information terminals are increasingly progressed in multifunction and size-reduction as mentioned above.

### SUMMARY OF THE INVENTION

The present invention has been made to solve the conventional problems associated with portable information terminals as described above.

Accordingly, it is an object of the present invention to provide a portable information terminal achieving an increase in multifunction capabilities and a reduction in size without complication of manipulation, to avoid the "digital divide" problem.

To attain the above object, the present invention provides a portable information terminal comprising: a plurality of main components coupled with the capability to change in position relative to each other, and randomly including a display provided, a manipulation section, and a controller which includes a memory medium for storing a plurality of application programs; a coupling element for coupling the plurality of the main components; and a position detection member for detecting each of the relative positions of the plurality of the main components coupled at the coupling element. The controller is designed to establish correspondence between each arbitrary application program of the plurality of the application programs stored on the memory medium and each arbitrary relative position of the relative positions preset for the main components coupled to each other, and to activate the arbitrary application program corresponding to the arbitrary relative position of the preset relative positions of the main components detected by the position detection member when the position detection member is detected the arbitrary relative position.

The portable information terminal according to the above first feature of the present invention has a main body essentially consisting of a plurality of main components. For example, one of the main components includes the manipulation section on which operation keys and the like are arranged, and the controller having a CPU, the memory medium for storing a variety of application programs and data, and the like, and the other main component is constructed separately from the one main component and includes the display. The plurality of the main components are coupled by the coupling element in such a manner that one of the main components is rotated or slid in response to the other main component to vary the mutually relative positions, for example.

The relative positions of the plurality of the main components are changed by operation of the user. Then in the controller, the position detection member provided in the coupling element detects that the main components have been set in one of the preset relative positions. Then an application program set to correspond to the detected relative position is read from the memory medium provided in the controller to be automatically activated.

With the first feature as described above, the portable information terminal is changed in physical form and allows automatic activation of the application program corresponding to the changed form. Thus, the functions in the portable information terminal can be readily switched without the needs of complicated combination of function keys or use of a GUI for switching of the functions as done in the prior art.

In turn, with the simplified switching of the functions, it is possible to avoid the portable information terminal from having complication in manipulation associated with the progress in multifunction capabilities and reduction in size, leading to prevention of occurrence of the so-called "digital divide" problem.

To attain the aforementioned object, a portable information terminal of the present invention has a second feature, in addition to the configuration of the first feature, that the coupling element is a rotation supporting element coupling rotatably between ends of the respective main components, and the positional detection member is installed in the rotation supporting element and detects each of relatively rotational positions of the main components coupled.

With the second feature, the ends of the plurality of the main components are rotatably coupled to each other through the rotation support element serving as the coupling element. The portable information terminal is changed in physical form by rotating one of the main components, which are coupled through the rotation support element, in relation to another main component. The position detection member detects the relative position by means of detection of the rotational position of the one main component in relation to the other, namely, an angle between the one and other main components.

To attain the aforementioned object, a portable information terminal has a third feature, in addition to the configuration of the second feature, that the arbitrary relative position of the preset relative positions is any one of a position in which the main components coupled to each other are superimposed, a position in which the main components form an right angle from each other, and a position in which the main components form an angle of 180 degrees from each other.

With the third feature, the position detection member detects each of the relative positions of the main components coupled to each other through the rotation support element when the coupled main components are superimposed on each other or when the coupled main components are opened an angel of 90 degrees or 180 degrees from each other.

Upon the detection by the position detection member, the application program corresponding to the detected relative position is automatically activated to execute the function thereof.

To attain the aforementioned object, a portable information terminal has a fourth feature, in addition to the configuration of the third feature, that the controller is set to activate the application program stored on the memory medium for executing a music-player function when the positional detection member detects that the coupled main components are positioned in the position in which the main components are superimposed.

With the fourth feature, when the physical form of the portable information terminal detected by the position detection member is the closed and superimposed form of the main components coupled to each other, the application program for executing the music-player function is automatically activated, and a music-selecting screen or the like is shown on the display provided in one of the main components, for example. It is then possible to reproduce a musical piece from music data stored on the memory medium, from music data downloaded through the medium of the computer network such as the Internet, or from other data.

To attain the aforementioned object, a portable information terminal has a fifth feature, in addition to the configuration of the third feature, that the controller is set to activate the application program stored on the memory medium for executing an electric-mailer function when the positional detection member detects that the coupled main components are positioned in the position in which the main components form a right angle from each other.

With the fifth feature, when the physical form of the portable information terminal detected by the position detection member is the form in which the main components coupled to each other are opened in positions forming a right angle from each other, the application program for executing the electronic-mailer function of transmitting and receiving electronic mail through connection to a computer network such as the Internet is automatically activated, and address data for transmitting the electronic mail or an inbox folder for receiving the electronic mail is displayed on the display which is provided by one of the main components, for example. It is then possible to transmit and receive the desired electronic mail.

To attain the aforementioned object, a portable information terminal has a sixth feature, in addition to the configuration of the third feature, that the controller is set to activate the application program stored on the memory medium for executing a portable-telephone function when the positional detection member detects that the coupled main components are positioned in the position in which the main components form an angle of 180 degrees from each other.

With the sixth feature, when the physical form of the portable information terminal detected by the position detection member is the form in which the main components coupled to each other are opened in positions forming an angle of 180 degrees from each other, the portable information terminal automatically activates the application program for executing the portable-telephone function of performing a voice-telephone call through a mobile communication network, and allows the display provided in one of the main components to show a telephone-directory data, for example. It is then possible to use the portable information terminal as a portable telephone.

To attain the aforementioned object, a portable information terminal has a seventh feature, in addition to the configuration of the first feature, that the manipulation section and the controller are provided in one of the main components coupled to each other, and the display is provided in another main component of the main components coupled to each other.

With the seventh feature, one of the main components which is provided with the manipulation section including the operation keys and the like and the controller including a CPU and the like is coupled to the other main component, in which the display is provided, through the coupling element in such a manner as to be changeable in the relative position of the one and other main components to each other. Thus, simply by changing the relative positions of the one and other main components, the placement of the manipulation section and the display can be selectively set, and additionally the application program set to correspond to the changed relative position of the one and other main components is automatically activated to execute the function thereof.

To attain the aforementioned object, a portable information terminal has an eighth feature, in addition to the configuration of the first feature, that the controller includes a loading element removably loaded with the memory medium, and the loading element is loaded with the memory medium for storing the required application program corresponding to the relative position of the main components coupled to each other.

In the case of the portable information terminal of the eighth feature, the loading element, which is loaded with the memory medium removable insert, is provided in the controller included in any one of the main components coupled changeably in the relative position to each other. Accordingly, by appropriately inserting into the loading element the memory medium such as a memory card or the like storing the application program desired, the user can customize the functions installed on the portable information terminal.

Each of the functions installed in the portable information terminal by means of the inserted memory medium is executed in response to the corresponding relative position of the relative positions of the main components coupled to each other.

These and other objects and features of the present invention will become more apparent from the following detailed description with reference to the accompanying drawings.

### BRIEF DESCRIPTION OF THE DRAWINGS

Fig. 1 is a front view illustrating an embodiment of a portable information terminal in a closed position of a manipulation section and a display section, in accordance with the present invention.

Fig. 2 is a back view of the portable information terminal in Fig. 1.

Fig. 3 is a front view illustrating the portable information terminal in an open position when the display section is opened 90 degrees in relation to the manipulation section.

Fig. 4 is a front view illustrating the portable information terminal in an open position when the display section is opened 180 degrees in relation to the manipulation section.

Fig. 5 is a block diagram illustrating the circuit configuration of a controller of the portable information terminal.

Fig. 6A is a back view of a CCD camera mounted on the portable information terminal.

Fig. 6B is a front view illustrating a display on the display screen of the portable information terminal in digital-camera mode.

### DETAILED DESCRIPTION OF THE PREFERRED EMBODIMENT

A preferred embodiment according to the present invention will be described hereinafter in detail with reference to the accompanying drawings.

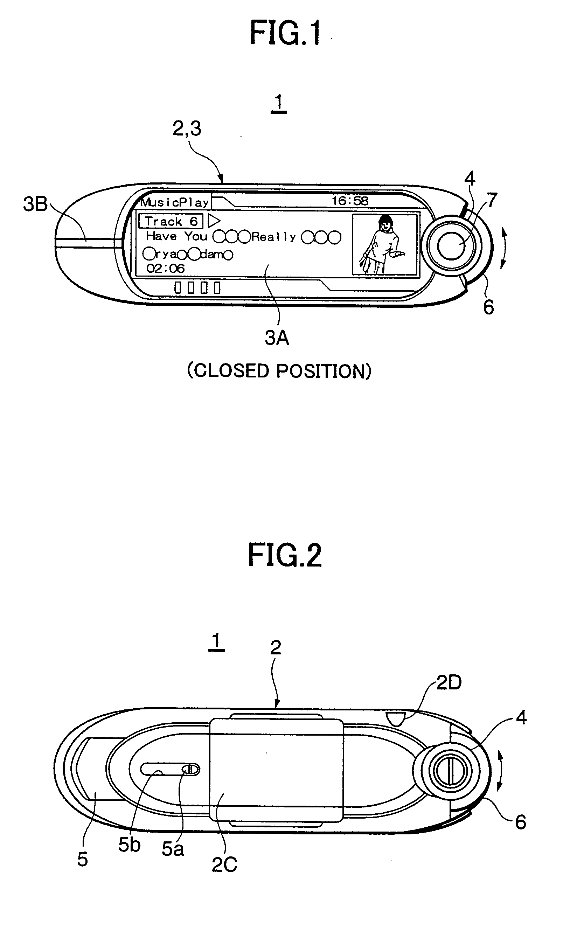

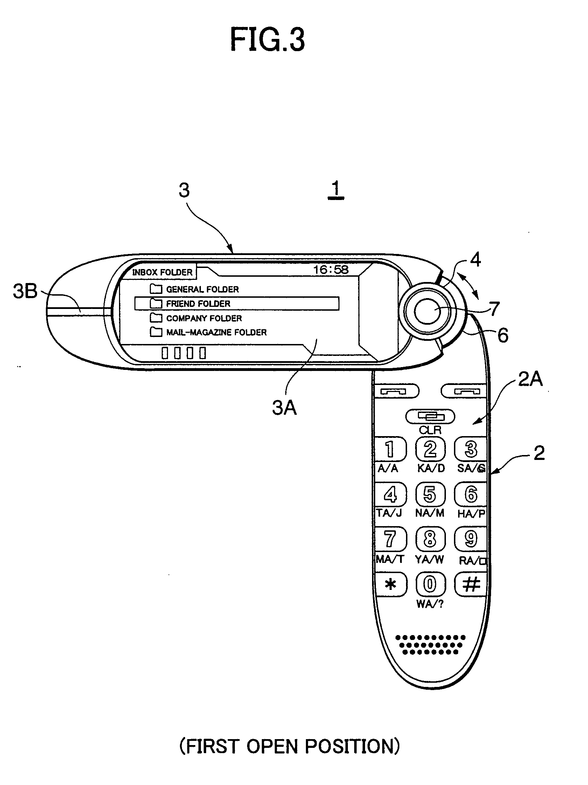

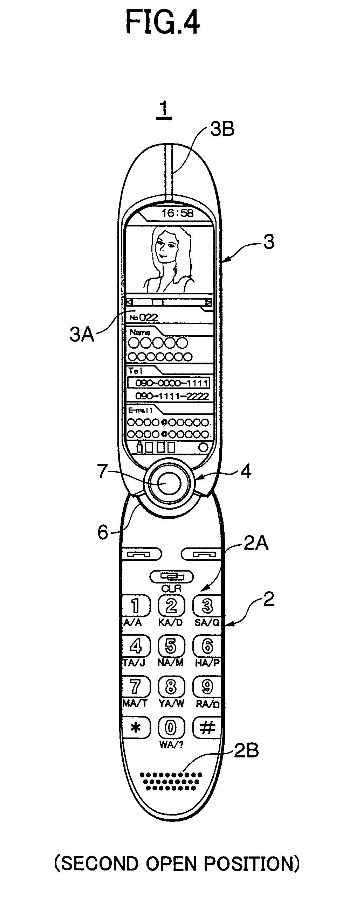

Fig. 1 is a front view illustrating an embodiment of a portable information terminal in a closed position of a manipulation section and a display section, in accordance with the present invention. Fig. 2 is a back view of the portable information terminal in Fig. 1. Fig. 3 is a front view illustrating the portable information terminal in an open position when the display section is opened 90 degrees in relation to the manipulation section. Fig. 4 is a front view illustrating the portable information terminal in an open position when the display section is opened 180 degrees against the manipulation section.

In Fig. 1 to Fig. 4, the portable information terminal 1 includes, an elongated approximately oval plate-shaped manipulation part 2, and a plate-shaped display part 3 having approximately the same outside shape as that of the manipulation part 2.

The display part 3 has a bottom end coupled rotatably to a top end of the manipulation part 2 through a rotation supporting element 4. With this coupling, the display part 3 is rotationally moved in relation to the manipulation part 2 from a closed position in which the display part 3 and the manipulation part 2 are superimposed on each other as illustrated in Fig. 1, to a first open position in which the display part 3 is opened to form a substantially right angle with the manipulation part 2 as illustrated in Fig. 3, or a second open position in which the display part 3 is opened substantially 180 degrees from the manipulation part 2 as illustrated in Fig. 4.

As illustrated in Figs. 3 and 4, the manipulation part 2 of the portable information terminal 1 includes a variety of operation keys 2A with a ten-key pad required for the originating and receiving of telephone calls which are properly arranged over the front surface of the manipulation part 2, and a microphone 2B in the portion of the manipulation part 2 opposite to the portion supported by the rotation supporting element 4.

On the back surface of the manipulation part 2 as illustrated in Fig. 2, a card interface 2C loaded with a memory card movable insert is provided in a central portion thereof, and a CCD camera 5 is provided in the portion of the part 2 opposite to the portion supported by the rotation supporting element 4. The camera 5 is provided unitedly with a protrusion knob 5a, and the protrusion knob 5a is guided along a guide groove 5b opened in the casing so that the CCD camera 5 is slid between the position in which the camera 5 is housed in a casing of the manipulation part 2 and the position in which the camera 5 juts outward from the casing of the part 2 along the axis of the part 2. When the CCD camera 5 is slid to the jutting position, a lens thereof is placed in a correct position for exposure toward the back.

A headphone terminal 2D is also mounted around the rotation supporting element 4 on the back of the manipulation part 2.

The display part 3 includes a display 3A having a size occupying most of a central portion of the front of the display part 3, and a speaker 3B at a top end thereof.

The display part 3 further includes a jog dial 6 and a joystick 7 at the bottom end thereof (the portion supported by the rotation supporting element 4). The jog dial 6 has an outer edge which protrudes and is visible from the bottom end of the display part 3, and is placed concentrically with the rotation supporting element 4 and rotatably in both directions. The joystick 7 is positioned on the same axis as that of the rotation supporting element 4.

The rotation supporting element 4 of the portable information terminal 1 includes a rotational position detection sensor (not shown) for detecting in which position of the aforementioned three positions, the closed position, first open position and second open position, the display part 3 is situated in relation to the manipulation part 2.

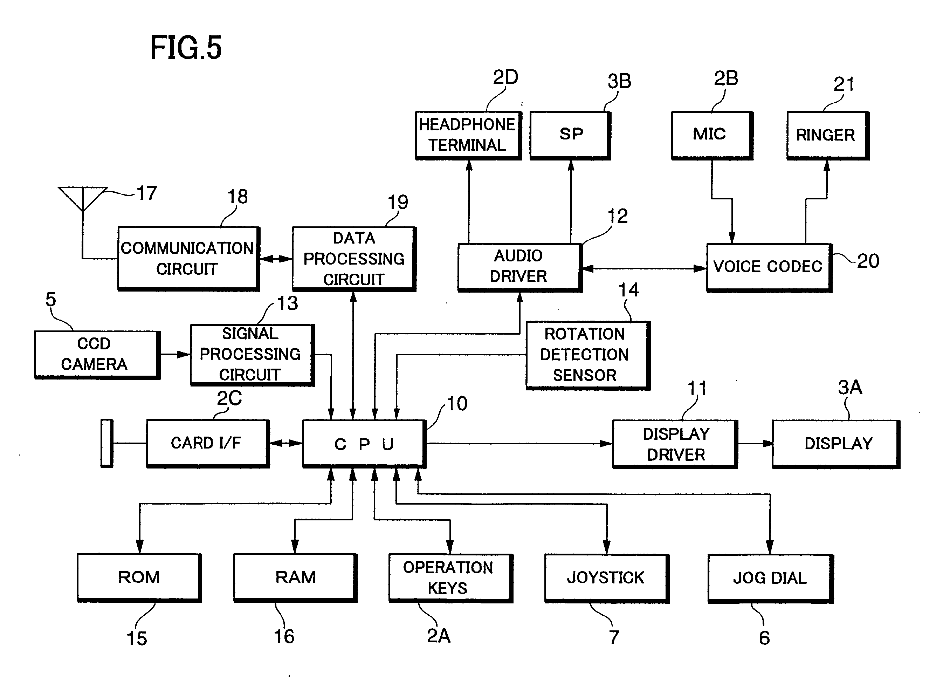

Fig. 5 is a block diagram illustrating an example of the configuration of a controller incorporated in the portable information terminal 1.

Referring to Fig. 5, a CPU 10 is connected through a display driver 11 to the display panel 3A, and through an audio driver 12 to the speaker 3B and the headphone terminal 2D, and also through a signal processing circuit 13 to the CCD camera 5. The CPU 10 is further connected to the rotational position detection sensor 14 provided in the rotation supporting element 4 for the display part 3; the card interface 2C for loading a memory card such as a SmartMedia, compact flash, memory stick, and multimedia card; a ROM 15 for storing driver software for each of the devices connected to the CPU 10, and the like; a RAM 16 for storing application programs and data; the operation keys 2A; the joystick 7; and the jog dial 6.

The CPU 10 is further connected to an antenna 17, incorporated inside the casing of the portable information terminal 1, through a data processing circuit 19 and a communication circuit 18. The data processing circuit 19 conducts a clock control for various signals transmitted from and received by the communication circuit 18 and serves as an interface of the CPU 10.

The audio driver 12 is connected through an audio codec 20 to the microphone 2B and a ringer 21.

In the controller of the portable information terminal 1, the communication circuit 18 connects to a mobile communication network through the antenna 17, and also to a computer network such as the Internet through the mobile communication network, and further establishes Bluetooth communication when modes are switched.

The CPU 10 further exercises control over operational controls for various functions installed in the portable information terminal 1 on the basis of an input signal generated by the manipulation of the operation keys 2A, jog dial 6 or joystick 7. Such operational controls are performed for, for example, the running of an application program stored in the RAM 16 or in a memory card loaded into the card interface 2C; the displaying of a video or an image based on the data stored in those recording mediums on the display 3A; the outputting of audio to the speaker 3B or headphones connected to the headphone terminal 2D; the inputting of audio from the microphone 2B through an audio codec 20 and the audio driver 12; the outputting of audio to the ringer unit 21 through the audio driver 12 and the audio codec 20; the photographing of the CCD camera 5; and the storing of data of the image photographed by the CCD camera 5 in the RAM 16 or in a memory card loaded in the card interface 2C.

The CPU 10 also controls the switching to operational mode corresponding to each position of the display part 3 as described later, on the basis of a detection signal representing a rotational position of the display part 3 in relation to the manipulation part 2 that is detected by the rotational position detection sensor 14.

Next, a description will be given of usage patterns of the aforementioned portable information terminal 1.

Functions installed in the portable information terminal 1 are based on the application programs stored in the ROM 15 and RAM 16, or the application programs stored in a memory card loaded in the card interface 2C. The user can customize the portable information terminal 1 to make functions desirable by rewriting the application program in the RAM 16 or by interchanging the memory cards.

The following description takes as an example the case where the portable information terminal 1 is installed with a music player function, a mailer function, a portable telephone function, and a digital camera function.

As described earlier, the display part 3 is rotated about the rotation supporting element 4 to open and close against he manipulation part 2 as compared to the action of a fully extended opened blade of a jackknife. Hence, the portable information terminal 1 can be set in three positions: the closed position (i.e. the display part 3 and the manipulation part 2 are superimposed on each other) in Fig. 1, the first open position (i.e. the display part 3 is opened 90 degrees from the manipulation part 2) in Fig. 3, and the second open position (i.e. the display part 3 is opened 180 degrees from the manipulation part 2) in Fig. 4.

Assuming that the portable information terminal 1 is set to activate an application program to execute the music player function in the closed position in Fig. 1, an application program to execute the mailer function in the first open position in Fig. 3, and an application program to execute the portable telephone function in the second open position in Fig. 4.

The CPU 10 of the portable information terminal 1 recognizes a rotated position of the display part 3 in relation to the manipulation part 2 on the basis of a rotational position detection signal inputted from the rotational position detection sensor 14 (see Fig. 5) provided in the rotation supporting element 4.

Specifically, the rotational position detection sensor 14 detects that the display part 3 is in the closed position in Fig. 1 in relation to the manipulation part 2 and sends a detected signal representing the rotation position of the display part 3 to the CPU 10. Upon the reception of the detected signal, the CPU 10 reads and activates an application program for a music player stored in the RAM 16 or a memory card loaded in the card interface 2C.

Upon the activation of the music-player application program, the display panel 3A of the display part 3 is operated through the display driver 11 to display a title list of musical pieces which are stored on the RAM 16 or a memory card loaded in the card interface 2C after being downloaded from a music information provider through the Internet, for example.

Then, the CPU 10 selects a musical piece from the displayed title list on the basis of a signal inputted from the jog dial 6 or joystick 7 manipulated by the user, and then transmits the data of the selected musical piece to the audio driver 12.

At this point, the headphones are connected to the headphone terminal 2D, so that an audio signal having been converted in the audio driver 12 is outputted through the headphone terminal 2D to the headphones for audio reproduction. Thus, the portable information terminal 1 provides the user with pleasure in listening to stereophonic music.

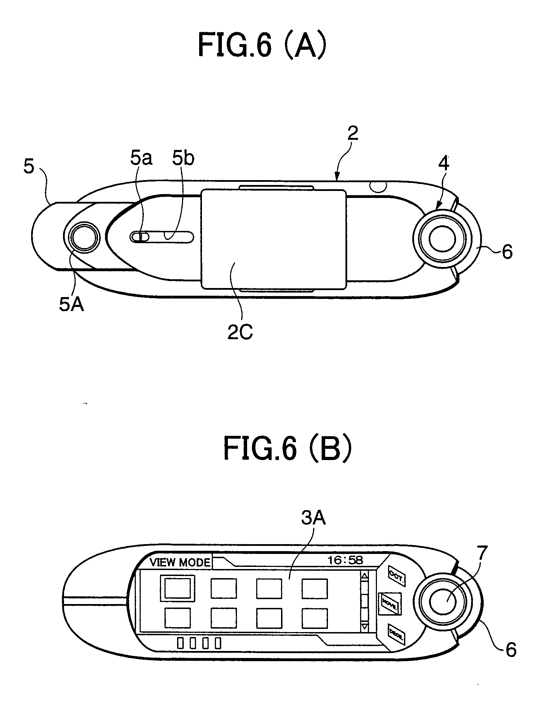

Further, in the closed position of the display part 3 as illustrated in Fig. 6A, the CCD camera 5 mounted on the back of the manipulation part 2 is slid outward by means of the protrusion knob 5a being guided along the guide groove 5b, to jut the lens 5A from the leading end of the manipulation part 2 for exposure toward the back, whereupon a slide detection sensor (not shown) detects that the lens 5A of the CCD camera 5 is slid out, and then inputs the detected signal to the CPU 10.

Upon the receipt of the detected signal, the CPU 10 reads and activates the digital-camera application program stored in the RAM 16 or a memory card loaded in the card interface 2C.

Upon the activation of the digital-camera application program, the CPU 10 allocates functions as a shutter, a zooming operation and the like to the jog dial 6 or joystick 7. The display 3A of the display part 3 displays an image to be photographed by the CCD camera 5.

In this way, the user can takes a photograph with the digital camera. Then, a resulting digital image signal is transmitted from the CCD camera 5 to the signal processing circuit 13, and then is processed into digital image data by the circuit 13. Thereafter, the CPU 10 stores the digital image data in the RAM 16 or the memory card loaded in the card interface 2C.

When the photographed digital images are checked or reproduced, the CPU 10 displays, in response to the manipulation input from the jog dial 6 or joystick 7, thumbnail images of the stored digital images on the display 3A as illustrated in Fig. 6B. Such displaying enables the user to check and select the stored digital images for reproduction of a desired image with ease.

When the rotational position detection sensor 14 detects that the display part 3 is in the first open position in Fig. 3 in relation to the manipulation part 2 and the CPU 10 receives a detection signal representing a rotational position of the display part 3, the CPU 10 reads and activates the mailer application program stored in the RAM 16 or a memory card loaded in the card interface 2C.

Upon the activation of the mailer application program, the CPU 10 allocates functions for transmission and receives of mail to the operation keys 2A arranged on the manipulation part 2, the jog dial 6 and the joystick 7, respectively. When the user manipulates the operation keys 2A or the like to enter transmission/receipt of mail, the CPU 10 operates the communication circuit 18 to connect to a computer network such as the Internet through the antenna 17, to transmit electric mail or download electric mail from a mail server connected to the computer network.

When the electric mail is downloaded, the CPU 10 displays a screen for an inbox folder on the display panel 3A as shown in Fig. 3, and stores the received pieces of electric mail in each folder in the inbox folder displayed.

When the rotational position detection sensor 14 detects that the display part 3 is in the second open position in Fig. 4 in relation to the manipulation part 2 and the CPU 10 receives a detection signal representing a rotational position of the display part 3, the CPU 10 reads and activates the portable-telephone application program stored in the RAM 16 or a memory card loaded in the card interface 2C.

Upon the activation of the portable-telephone application program, the CPU 10 allocates operational functions for the portable telephone to the operation keys 2A arranged on the manipulation part 2, respectively. When the user manipulates the operation keys 2A for originating a telephone call, the CPU 10 operates the communication circuit 18 to connect to a mobile communication network through the antenna 17 to establish communication with a receiver.

At this point, as illustrated in Fig. 4, the CPU 10 displays a screen for retrieving a telephone number from telephone directory data recorded on the RAM 16 or the memory card loaded in the card interface 2C, on the display 3A of the display part 3 in response to manipulation inputted from the operation keys 2A.

Further, upon an incoming call through the mobile communication network, the CPU 10 establishes communication with a caller in response to input from the operation keys 2A manipulated by the user for receiving the incoming call.

As described hereinbefore, the portable information terminal 1 according to the present invention automatically switches functional modes in response to a rotated position of the display part 3 in relation to the manipulation part 2. Thus, the switching of the functional modes can be achieved by significantly simple manipulation, resulting in elimination of the need for switching functional modes with complicated combination of function keys and the like as done in the prior art.

The functions which are respectively set in correspondence with the rotational positions of the display part 3 of the portable information terminal 1, are not limited to those in the aforementioned embodiment. For example, a memory card storing an application program for executing a required function may be appropriately loaded in the card interface 2C, and the portable information terminal 1 may be set such that the application program activates when the display part 3 is moved to a required rotational position, thereby enabling the user to customize freely.

The terms and description used herein are set forth by way of illustration only and are not meant as limitations. Those skilled in the art will recognize that numerous variations are possible within the spirit and scope of the invention as defined in the following claims.

## Claims

1. A portable information terminal **characterized by**:
a plurality of main components (2, 3) coupled with the capability to change in position relative to each other, and randomly including a display (3A), a manipulation section (2A, 6, 7), and a controller (10) provided with a memory medium (15, 16) for storing a plurality of application programs;
a coupling element (4) for coupling said plurality of the main components (2, 3); and
a position detection member (14) for detecting each of the relative positions of the plurality of the main components (2, 3) coupled at the coupling element (4),
and in that said controller (10) is designed to establish correspondence between each arbitrary application program of the plurality of the application programs stored in said memory medium (15, 16) and each arbitrary relative position of said relative positions preset for said main components (2, 3) coupled to each other, and to activate the application program corresponding to the arbitrary relative position of said preset relative positions of the main components (2, 3) detected by said positional detection member (14) when the positional detection member (14) detects said arbitrary relative position.

2. A portable information terminal according to claim 1, wherein said coupling element is a rotation supporting element (4) for coupling rotatably between ends of said respective main components (2, 3), and said positional detection member (14) is installed in the rotation supporting element (4) and detects each of relatively rotational positions of the main components (2, 3) coupled.

3. A portable information terminal according to claim 2, wherein said arbitrary relative position of said preset relative positions is any one of a position in which said main components (2, 3) coupled to each other are superimposed, a position in which said main components (2, 3) form an right angle from each other, and a position in which said main components (2, 3) form an angle of 180 degrees from each other.

4. A portable information terminal according to claim 3, wherein said controller (10) is set to activate the application program stored in said memory medium (15, 16) for executing a music-player function when said positional detection member (14) detects that said coupled main components (2, 3) are positioned in said position in which the main components (2, 3) are superimposed.

5. A portable information terminal according to claim 3, wherein said controller (10) is set to activate the application program stored in said memory medium (15, 16) for executing an electric-mailer function when said positional detection member (14) detects that said coupled main components (2, 3) are positioned in said position in which the main components (2, 3) form a right angle from each other.

6. A portable information terminal according to claim 3, wherein said controller (10) is set to activate the application program stored in said memory medium (15, 16) for executing a portable-telephone function when said positional detection member (14) detects that said coupled main components (2, 3) are positioned in said position in which the main components (2, 3) form an angle of 180 degrees from each other.

7. A portable information terminal according to claim 1, wherein said manipulation section and said controller (10) are provided in one of said main components (2, 3) coupled to each other, and said display (3A) is provided in another main component of the main components (2, 3) coupled to each other.

8. A portable information terminal according to claim 1, wherein said controller (10) includes a loading element (2C) removably loaded with the memory medium, and the loading element (2C) is loaded with the memory medium for storing the required application programs respectively corresponding to said relative positions of said main components (2, 3) coupled to each other.
